# EUROPÄISCHE PATENTSCHRIFT

(11) **EP 2 045 894 B1**
(45) Veröffentlichungstag und Bekanntmachung des Hinweises auf die Patenterteilung: **22.04.2015**
(21) Anmeldenummer: 07113951.3
(22) Anmeldetag: 07.08.2007
(51) Int. Cl.: H02J 1/14

(54) **Kraftfahrzeuglichtanlage**
Motor vehicle lighting system
Installation d'éclairage pour véhicule automobile

(43) Veröffentlichungstag der Anmeldung: 08.04.2009
(73) Patentinhaber: Hella KGaA Hueck & Co., 59552 Lippstadt (DE)
(72) Erfinder: Drost, Malte, 59558 Lippstadt (DE); Lucas, Lars, 33100 Paderborn (DE)
(74) Vertreter: Downar, Michael

(56) Entgegenhaltungen:
- EP-A- 0 325 205
- WO-A-2005/051050
- DE-A1- 3 436 391
- DE-A1- 10 304 636

## Beschreibung

Die Erfindung bezieht sich auf eine Kraftfahrzeuglichtanlage mit einem rechten und einen linken Scheinwerfer, wobei die Scheinwerfer jeweils eine Gasentladungslampe als Lichtquelle aufweisen. Derartige Scheinwerfer werden auch als Xenon-Scheinwerfer bezeichnet. Für den Betrieb der Gasentladungslampen ist eine spezielle Schaltungsanordnung erforderlich, die in einem sogenannten Vorschaltgerät angeordnet ist. Dabei empfangen die beiden Vorschaltgeräte über ein Bus-System von einem Bordnetz-Steuergerät einen Einschaltbefehl für die Gasentladungslampe. Eine derartige Kraftfahrzeuglichtanlage ist beispielsweise aus der DE 602 00 395 T2 bekannt.

Während der Einschaltphase der Gasentladungslampen ist die Strom- und Leistungsaufnahme der Vorschaltgeräte um ein Vielfaches höher als im normalen Betrieb. Da die beiden Vorschaltgeräte bei einer Ansteuerung über ein Bus-System die Einschaltbefehle gleichzeitig empfangen, wird die Belastung des Fahrzeugbordnetzes, aus dem die Vorschaltgeräte elektrisch versorgt werden, während der Einschaltphase noch verdoppelt. Dabei kann diese hohe Belastung insbesondere zu thermischen Problemen führen.

Dokument DE 10304636 A1 offenbart die Merkmale des Oberbegriffes des Anspruchs 1.

Aufgabe der Erfindung ist es daher eine Kraftfahrzeuglichtanlage zu entwickeln, bei der die Bordnetzbelastung deutlich verringert wird. Diese Aufgabe wird durch die Merkmale des Anspruches 1 gelöst. Die sich daran anschließenden Unteransprüche beziehen sich auf vorteilhafte Ausgestaltungen.

Erfindungsgemäß ist in dem Vorschaltgerät des linken oder des rechten Scheinwerfers eine Verzögerungseinheit integriert ist, welche bewirkt, dass der Einschaltbefehl nach Erhalt desselben erst mit einer vorbestimmten zeitlichen Verzögerung (ΔT) ausgeführt wird. Dabei ist die zeitliche Verzögerung (ΔT) so groß gewählt, dass die eine Gasentladungslampe erst dann eingeschaltet wird, wenn die Einschaltphase der anderen Gasentladungslampe zumindest fast beendet ist. Durch das asynchrone Einschalten der beiden Gasentladungslampen wird somit die Bordnetzbelastung erheblich verringert, da das Bordnetz nicht mehr gleichzeitig mit der hohen Stromaufnahme durch die beiden Vorschaltgeräte während der Einschaltphase belastet wird.

Anhand der beigefügten Zeichnungen wird die Erfindung nachfolgend näher erläutert. Dabei zeigt:
- Fig. 1: ein Blockschaltbild der Kraftfahrzeuglichtanlage,
- Fig. 2: den zeitlichen Verlauf der Stromaufnahme durch die Vorschaltgeräte während des Einschaltens der Gasentladungslampen,

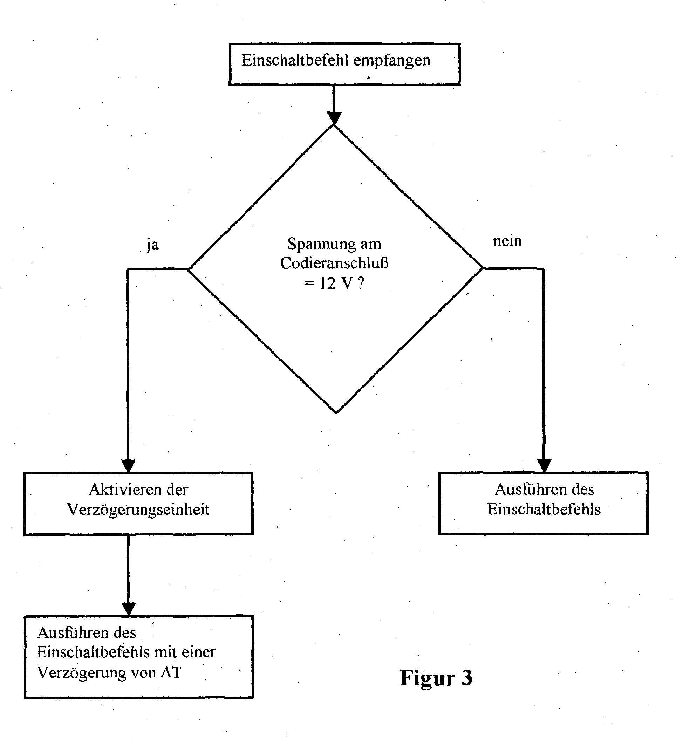

- Fig. 3: eine Veranschaulichung des Ablaufes, der nach Erhalt des Einschaltbefehls durchlaufen wird,
- Fig.4: eine schematische Darstellung eines Vorschaltgerätes mit seinen Anschlüssen, insbesondere mit dem erfindungsgemäßen Codier-Anschluss.

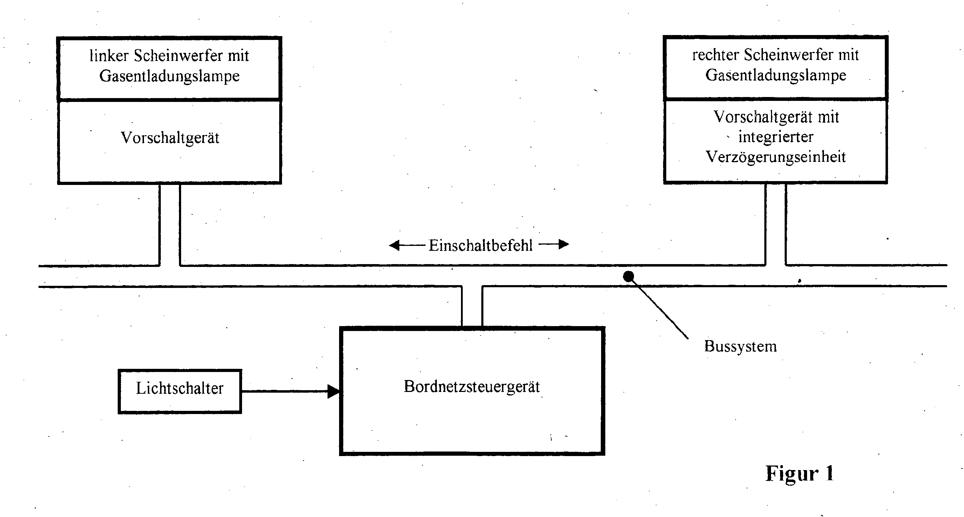

Figur 1 zeigt ein Blockschaltbild einer erfindungsgemäßen Kraftfahrzeuglichtanlage. Diese umfasst die beiden Scheinwerfer (links, rechts) mit jeweils einer Gasentladungslampe. Jedem Scheinwerfer ist dabei für den Betrieb der Gasentladungslampe ein Vorschaltgerät zugeordnet. In dieser Darstellung nicht gesondert gezeigt ist das eigentliche Zündgerät, das unmittelbar an der Gasentladungslampe angeordnet sein kann, oder auch im Vorschaltgerät integriert sein kann.

Sobald über den Lichtschalter beispielsweise das Signal "Abblendlicht Ein" erzeugt wird, wird über das Bordnetzsteuergerät ein Einschaltbefehl generiert, der über das Bus-System (z.B. ein LIN-Bus) gleichzeitig an die beiden Vorschaltgeräte gesendet wird. In der Ausführungsform gemäß Figur 1 ist nun im Vorschaltgerät des rechten Scheinwerfers eine Verzögerungseinheit integriert ist, welche bewirkt, dass der Einschaltbefehl nach Erhalt desselben erst mit einer vorbestimmten zeitlichen Verzögerung (ΔT) ausgeführt wird. Dabei kann die Verzögerungseinheit als innerhalb des Vorschaltgerätes ablaufendes Computerprogramm ausgebildet sein. Darüber hinaus ist es auch im Rahmen der Erfindung vorgesehen, die Verzögerungseinheit als Timer-Baustein (beispielsweise unter Verwendung eines als RC-Glied beschalteten Monofolps) auszubilden.

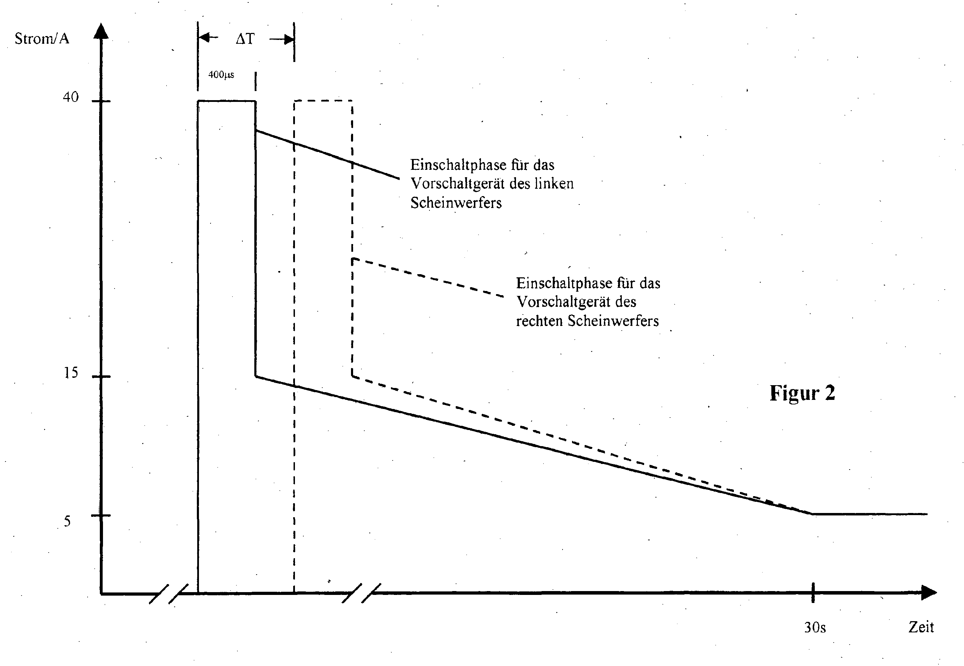

In Figur 2 ist das zeitliche Verhalten der Stromaufnahme für die beiden Vorschaltgeräte dargestellt. Im dargestellten typischen Beispiel beträgt die Hochstrom-Einschaltphase, welche nahezu unmittelbar mit der Ausführung des Einschaltbefehls beginnt ca. 400µs. Während dieser Zeit beträgt die Stromaufnahme des Vorschaltgerätes ca. 40 Ampere. Nachdem die Gasentladungslampe gezündet hat, sinkt die Stromaufnahme schlagartig auf ca. 15 Ampere ab und fällt dann nach ca. 30s auf einen Betriebsstromwert von ca. 5 Ampere. Wie in Figur 2 erkennbar erfolgt die Ausführung des Einschaltbefehls durch das Vorschaltgerät für den rechten Scheinwerfer erst mit einer Zeitverzögerung von ΔT, so dass die Hochstrom-Einschaltphase für das rechte Vorschaltgerät erst beginnt, wenn die Hochstrom-Einschaltphase für das Vorschaltgerät des linken Scheinwerfers bereits beendet ist. Dabei wird eine Verzögerungszeit gewählt, die größer ist als die typische Dauer der Einschaltphasen. Im dargestellten Beispiel beträgt die Verzögerungszeit ca. 500µs. Obwohl mit dieser Verzögerungszeit die temporäre Hochstrom-Doppelbelastung des Bordnetzes vermieden wird, ist die Verzögerungszeit andererseits wiederum so kurz, dass das asynchrone Einschalten der beiden Scheinwerfer vom Fahrer und den Verkehrsteilnehmern nicht wahrgenommen wird.

In der Ausführungsform gemäß Figur 1 weist nur das Vorschaltgerät des rechten Scheinwerfers eine Verzögerungseinheit auf. Es ist jedoch im Rahmen der Erfindung auch vorgesehen, dass beide Vorschaltgeräte eine integrierte Verzögerungseinheit aufweisen, wobei die Verzögerungseinheiten dann wahlweise durch ein von außen an das Vorschaltgerät anglegbares Signal aktivierbar oder deaktivierbar sind. Auf diese Weise können baugleiche Vorschaltgeräte verwendet werden, wobei troztdem das erfindungsgemäß asynchrone Einschalten der Scheinwerfer bewirkt wird. Die Verwendung von baugleichen Vorschaltgeräten für den linken und rechten Scheinwerfer vereinfacht sowohl die Handhabung bei der Erstmontage als auch bei der Ersatzteilmontage im Reparaturfall.

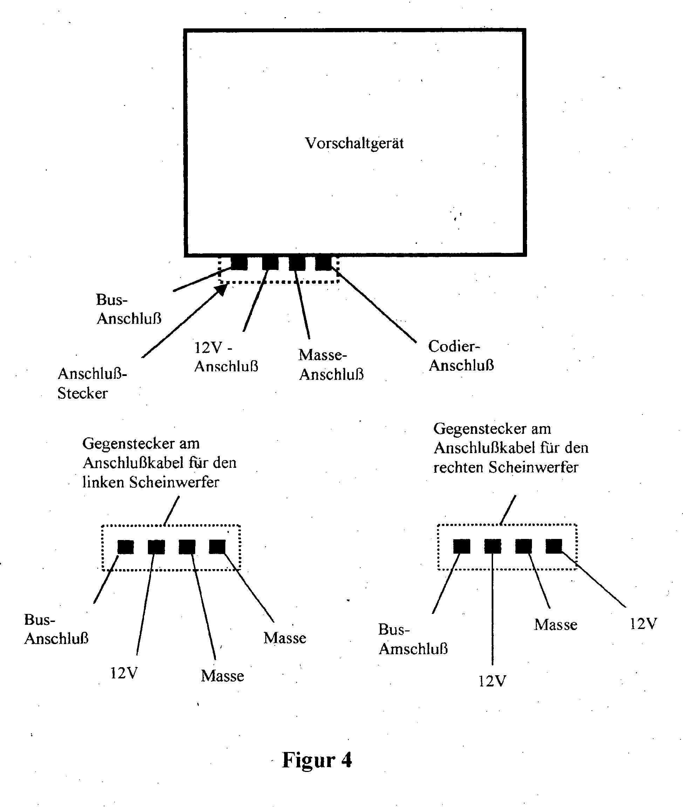

Zur Aktivierung oder Deaktivierung der Verzögerungseinheit weisen die Vorschaltgeräte vorzugsweise jeweils einen Codier-Anschluss (siehe Figur 4) auf, wobei die Aktivierung oder Deaktivierung der Verzögerungseinheit über das von außen an den Codieranschluss angelegte Spannungspotential erfolgt. Dieser Codier-Anschluss ist vorzugsweise in einem Anschluss-Stecker angeordnet, der außerdem noch den Bus-Anschluss, den Bordnetzversorgungsanschluss (12V-Anschluß) und den Masse-Anschluss umfasst. Dieser Anschluss-Stecker wird mit einem Gegenstecker am jeweiligen Scheinwerfer-Anschlusskabel verbunden. Dabei befindet sich der Codier-Anschluss beim Gegenstecker des Anschlusskabels für den rechten Scheinwerfer auf Bordnetzspannungspotential von 12V, während der Codier-Anschluss beim Gegenstecker des Anschlusskabels für den linken Scheinwerfer auf Massepotential liegt. Selbstverständlich kann die Codierung (d.h. die Festlegung bei welchem Vorschaltgerät die Verzögerungseinheit aktiviert wird) auch umgekehrt erfolgen

Die Codierung erfolgt so in einfacher Weise automatisch durch Verbindung des Anschluss-Steckers mit dem jeweiligen Gegenstecker des Scheinwerferanschlusskabels.

## Patentansprüche

1. Kraftfahrzeuglichtanlage mit einem rechten und einem linken Scheinwerfer,
- wobei die Scheinwerfer jeweils eine Gasentladungslampe mit einem elektrischen Vorschaltgerät aufweisen,
- wobei die Vorschaltgeräte über ein Bus-System von einem Bordnetzsteuergerät einen Einschaltbefehl für die Gasentladungslampe empfangen,
**dadurch gekennzeichnet, dass**
in dem Vorschaltgerät des linken oder des rechten Scheinwerfers eine Verzögerungseinheit integriert ist, welche bewirkt, dass der Einschaltbefehl nach Erhalt desselben erst mit einer vorbestimmten zeitlichen Verzögerung (ΔT) ausgeführt wird.

2. Kraftfahrzeuglichtanlage nach Anspruch 1,
**dadurch gekennzeichnet, dass**
die Verzögerungseinheit als innerhalb des Vorschaltgerätes ablaufendes Computerprogramm ausgebildet ist.

3. Kraftfahrzeuglichtanlage nach Anspruch 1,
**dadurch gekennzeichnet, dass**
die Verzögerungseinheit als innerhalb des Vorschaltgerätes angeordneter Timer-Baustein ausgebildet ist.

4. Kraftfahrzeuglichtanlage nach einem der vorstehenden Ansprüche,
**dadurch gekennzeichnet, dass**
die Verzögerungseinheit derart ausgelegt ist, dass eine zeitliche Verzögerung von mehr als 500µs bewirkt wird.

5. Kraftfahrzeuglichtanlage nach einem der vorstehenden Ansprüche, wobei sowohl in dem Vorschaltgerät des linken Scheinwerfers als auch im Vorschaltgerät des rechten Scheinwerfers jeweils eine Verzögerungseinheit integriert ist,
**dadurch gekennzeichnet, dass**
die Verzögerungseinheiten jeweils durch ein von außen an das Vorschaltgerät anlegbares Signal aktivierbar oder deaktivierbar ist.

6. Kraftfahrzeuglichtanlage nach Anspruch 5,
**dadurch gekennzeichnet, dass**
die beiden Vorschaltgeräte jeweils einen Codierungsanschluss aufweisen, wobei die Aktivierung oder Deaktivierung der Verzögerungseinheit über das von außen an den Codieranschluss angelegte Spannungspotential erfolgt.

## Claims

1. Lighting device for motor vehicles with a right-hand and a left-hand headlamp,
- wherein the headlamps each comprise a gas discharge lamp with an electronic ballast,
- wherein the ballasts receive a starting signal for the gas discharge lamp by a vehicle electric system via a bus-system,
**characterized in that**
a time delay unit is integrated in the ballast of the left-hand or right-hand headlamp, which causes the starting signal, once it has been received, to be executed only with a predetermined time delay (ΔT).

2. Lighting device for motor vehicles according to claim 1,
**characterized in that**
the time delay unit is embodied as a computer program running inside the ballast.

3. Lighting device for motor vehicles, according to claim 1,
**characterized in that**
the time delay unit is embodied as a timer module arranged inside the ballast.

4. Lighting device for motor vehicles according to one of the above claims,
**characterized in that**
the time delay unit has a layout effecting a time delay of more than 500µs.

5. Lighting device for motor vehicles according to one of the above claims,
wherein one time delay unit each is integrated in the ballast of the left-hand headlamp and in the ballast of the right-hand headlamp,
**characterized in that**
the time delay units can each be activated or deactivated by a signal sent from outside the ballast.

6. Lighting device for motor vehicles according to claim 5,
**characterized in that**
the two ballasts have one coded connection each,
wherein the activation or deactivation of the time delay unit is achieved by the voltage potential applied to the coded connection from outside.

## Revendications

1. Système d'éclairage pour véhicules automobiles avec un projecteur droit et un projecteur gauche,
- les projecteurs présentant chacun une lampe à décharge de gaz avec un ballast électrique,
- les ballasts recevant un ordre d'allumage pour la lampe à décharge de gaz au moyen d'un système de bus par un boîtier réseau de bord,
**caractérisé en ce qu'**
un dispositif de retard est intégré au ballast du projecteur gauche ou du projecteur droit qui assure que l'ordre d'allumage sera effectué dès sa réception avec un retard temporel prédéterminé (ΔT).

2. Système d'éclairage pour véhicules automobiles selon la revendication 1, **caractérisé en ce que** le dispositif de retard est réalisé en tant que programme informatique déroulant à l'intérieur du ballast.

3. Système d'éclairage pour véhicules automobiles selon la revendication 1, **caractérisé en ce que** le dispositif de retard est réalisé en tant que module temporisateur disposé à l'intérieur du ballast.

4. Système d'éclairage pour véhicules automobiles selon l'une des revendications précitées, **caractérisé en ce que** le dispositif de retard est conçu de telle manière qu'un retard temporel de plus de 500 µs soit réalisé.

5. Système d'éclairage pour véhicules automobiles selon l'une des revendications précitées, un dispositif de retard étant intégré non seulement au ballast du projecteur gauche mais aussi au ballast du projecteur droit,
**caractérisé en ce que** les dispositifs de retard peuvent être activés ou désactivés chaque fois par un signal applicable de l'extérieur au ballast.

6. Système d'éclairage pour véhicules automobiles selon la revendication 5, **caractérisé en ce que** les deux ballasts présentent chaque fois une connexion codée, l'activation ou la désactivation du dispositif de retard étant réalisée à l'intermédiaire d'un potentiel de tension appliqué de l'extérieur à la connexion codée.
